# EUROPÄISCHE PATENTSCHRIFT

(11) **EP 2 917 606 B1**
(45) Veröffentlichungstag und Bekanntmachung des Hinweises auf die Patenterteilung: **01.03.2017**
(21) Anmeldenummer: 13756149.4
(22) Anmeldetag: 02.09.2013
(51) Int. Cl.: F16G 1/08, B66B 7/06, F16G 1/12, F16G 1/28, F16G 5/06, F16G 5/10, F16G 5/20

(54) **RIEMEN FÜR DIE ANTRIEBSTECHNIK, INSBESONDERE RIEMENARTIGES ZUGELEMENT FÜR DIE AUFZUGSTECHNIK, MIT BRANDHEMMENDEN EIGENSCHAFTEN**
BELT FOR DRIVE TECHNOLOGY, PARTICULARLY A BELT-LIKE TRACTIVE ELEMENT FOR HOISTING TECHNOLOGY WITH FIRE-RESISTANT PROPERTIES
COURROIE POUR LA TECHNIQUE D'ENTRAÎNEMENT, EN PARTICULIER ÉLÉMENT DE TRACTION DU TYPE COURROIE POUR LA TECHNIQUE DES ASCENSEURS, PRÉSENTANT DES PROPRIÉTÉS IGNIFUGES

(30) Priorität: 09.11.2012 DE 102012110769
(43) Veröffentlichungstag der Anmeldung: 16.09.2015
(73) Patentinhaber: ContiTech Antriebssysteme GmbH, 30165 Hannover (DE)
(72) Erfinder: GÖSER, Hubert, 29451 Dannenberg (DE); BROCKE, Stephan, 22143Hamburg (DE)
(74) Vertreter: Preusser, Andrea
(86) Internationale Anmeldenummer: PCT/EP2013/068043
(87) Internationale Veröffentlichungsnummer: WO 2014/072093

(56) Entgegenhaltungen:
- DE-A1-102010 016 872

## Beschreibung

Die Erfindung betrifft einen Riemen für die Antriebstechnik, bestehend wenigstens aus:
- einem Riemenkörper aus zwei polymeren Materialen A und B mit elastischen Eigenschaften, umfassend eine Decklage als Riemenrücken und einen Unterbau mit einer Kraftübertragungszone; sowie
- einem in dem Riemenkörper eingebetteten Zugträger.

Derartige Riemen, die auch als Antriebsriemen oder Kraftübertragungsriemen bezeichnet werden, können als Flachriemen, Keilriemen, Keilrippenriemen, Zahnriemen oder als Verbundseile ausgebildet sein. Diesbezüglich wird insbesondere auf folgende Patentliteratur verwiesen: DE 38 23 157 A1, DE 100 16 351 A1, DE 10 2006 007 509 A1, DE 10 2007 062 285 A1, DE 10 2008 012 044 A1, WO 2005/080821 A1, WO 2006/066669 A1, US 3 981 206, US 5 417 618 und US 6 491 598.

Die Elastizität eines Riemens wird dadurch erreicht, dass der Riemenkörper und somit die Decklage und der Unterbau aus einem polymeren Material mit elastischen Eigenschaften bestehen, wobei hier insbesondere die beiden Materialgruppen Elastomere und thermoplastische Elastomere zu nennen sind. Von besonderer Bedeutung sind Elastomere auf der Basis einer vulkanisierten Kautschukmischung, enthaltend wenigstens eine Kautschukkomponente und Mischungsingredienzien. Als Kautschukkomponente wird insbesondere Ethylen-Propylen-Kautschuk (EPM), Ethylen-Propylen-Dien-Kautschuk (EPDM), (teil)hydrierter Nitrilkautschuk (HNBR), Fluor-Kautschuk (FKM), Naturkautschuk (NR), Chloropren-Kautschuk (CR), Styrol-Butadien-Kautschuk (SBR), Butadien-Kautschuk (BR) oder Polyurethan (PU) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei HNBR, EPM, EPDM, PU oder ein EPM/EPDM-Verschnitt. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern zwecks Verstärkung, und Farbpigmente. Diesbezüglich wird auf den allgemeinen Stand der Kautschukmischungstechnologie verwiesen.

Der Riemen ist mit einem eingebetteten Zugträger versehen, der aus wenigstens einem in Riemenlängsrichtung verlaufenden Zugstrang gebildet ist. Zumeist bilden mehrere Zugstränge eine Zugträgerlage. Von besonderer Bedeutung ist dabei ein Zugstrang in Cordconstruktion, wobei es diesbezüglich nach dem Stand der Technik verschiedene Werkstoffkonzeptionen gibt. Die wesentlichen Werkstofftypen sind: Stahl, Polyamid (PA), Aramid, Polyester, Glasfasern, Kohlefasern, Basalt, Polyetheretherketon (PEEK), Polyethylentherephthalat (PET), Polybenzoxazol (PBO) oder Polyethylen-2,6-naphthalat (PEN). Der Zugstrang ist zudem zumeist mit einem Haftsystem, beispielsweise mit einem Resorcin-Formaldeyd-Latex (RFL), präpariert, so dass eine dauerwirksame Haftung zu dem umgebenden polymeren Material gewährleistet ist.

Bei endlos geschlossenen Riemen für den Fahrzeugbau spielt der Werkstoff Stahl zwischenzeitlich eine untergeordnete Rolle. Hier werden insbesondere Zugstränge aus PA, PET sowie neuerdings aus Glas und / oder Basalt eingesetzt.

Bei den nicht endlos geschlossenen Riemen als Zugelement in der Aufzugstechnik - im folgenden ein Schwerpunktthema - kommt jedoch dem Zugstrangwerkstoff Stahl, insbesondere in Form von Stahlcorden, wegen der hohen Zugkraft eine wesentliche Bedeutung zu. Hinsichtlich des diesbezüglichen Standes der Technik wird insbesondere auf folgende Patentliteratur verwiesen: DE 10 2006 020 633 B3, DE 10 2008 018 191 A1, DE 10 2008 018 192 A1, DE 10 2008 037 537 A1, DE 10 2008 037 538 A1, EP 1 396 458 A2, EP 1 555 234 B1, US 2002/0000346 A1 und US 6 739 433.

Insbesondere die Kraftübertragungszone eines Riemens wird mit einer abriebsfesten Beschichtung versehen, die zusätzlich zur Geräuschreduzierung dient und zudem noch ölbeständig ausgerüstet sein kann. Eingesetzt wird dabei eine Flockauflage, insbesondere in Form eines Baumwoll- oder Aramidflocks, eine dünne mit Fasern (z.B. Aramidfasern) gefüllte elastische Polymerschicht, eine Textilauflage, insbesondere in Form eines Gewebes, Gewirkes oder Gestrickes, oder ein Folie (z.B. PTFE-Folie) oder ein Folienverbund (z.B. PA-PTFE-Folie). Von besonderer Bedeutung ist das Gewebe. Die hier genannten Beschichtungen werden auf der Kontaktseite zum Riemenkörper, insbesondere zum dessen Unterbau, zumeist haftfreundlich präpariert, beispielsweise mit RFL.

Ein Problem bei Riemen aller Art ist, dass das polymere Material des Riemenkörpers sehr gut brennbar ist. Im Brandfall würde das gesamte Riemenkörpermaterial abbrennen und gegebenenfalls auch noch den Zugträger schädigen. Diese Problematik ist besonders relevant bei einem riemenartigen Zugelement für die Aufzugstechnik, bei dem dann der Stahlzugträger beschädigt werden kann. Auf jeden Fall wäre die Funktion und somit die Sicherheit des Aufzuges nicht mehr gegeben.
Aus WO2011/141068A1 ist bereits bekannt, das polymere Material eines Riemenkörpers, welches aus zwei verschiedenen Materialien besteht, mit brandhemmenden Additiven auszustatten. Hierbei ist allerdings der Bereich des Riemenkörpers, welcher am höchsten mechanisch beansprucht ist, das arm oder frei an brandhemmenden Additiven, da diese Additive die mechanischen Eigenschaften des Riemenkörpers negativ beeinflussen. So steigt z. Bsp. der mechanische Abrieb, was zu einem vorzeitigen Versagen des Zugmittels führen kann.

Im Rahmen einer Weiterentwicklung besteht die Aufgabe der Erfindung darin, einen Riemen, insbesondere ein Zugelement für die Aufzugstechnik, bereitzustellen, bei dem das Riemenkörpermaterial sich durch eine weitere Verbesserung der brandhemmenden Eigenschaften auszeichnet, ohne dass die mechanischen Eigenschaften des Riemenkörpers negativ beeinflusst werden.

Gelöst wird diese Aufgabe dadurch, dass der Riemenkörper aus wenigstens zwei Materialen A und B besteht, nämlich aus:
- einem ersten Material A, das mit wenigstens einem brandhemmenden Additiv in Mengen von 15 bis 50 Gew. -% ausgerüstet ist und überall dort im Riemengrundkörper verbaut ist, wo die hohen mechanischen Eigenschaften nicht gefordert sind; sowie
- einem zweiten Material B, das mit wenigstens einem brandhemmenden Additiv in Mengen von 10 bis 35 Gew. -% ausgerüstet ist und in dem Bereich des Riemenkörpers zum Einsatz kommt, welcher am höchsten mechanisch beansprucht ist.

Überraschenderweise wurde gefunden, dass sich die brandhemmenden Eigenschaften verstärken lassen und sich gleichzeitig keine negativen Einflüsse auf die mechanischen Eigenschaften des Riemenkörpers zeigen, wenn ebenso das zweite Material B mit wenigstens einem brandhemmenden Additiv in Mengen von 10 bis 35 Gew. -% ausgerüstet ist. Dies war nicht zu erwarten, wie bereits oben ausgeführt wurde. Des Weiteren hat das brandhemmende Additiv überraschend einen positiven Einfluss auf den Reibbeiwert und damit auf die Abriebfestigkeit des Materials. Die Schwächung weiterer mechanischer Eigenschaften wird damit teilweise kompensiert. Wird in dem Material B allerdings mehr als 35 Gew. -% des brandhemmenden Additivs eingesetzt, so ist die mechanische Schwächung zumeist so groß, dass die positive Wirkung auf den Reibbeiwert diesen negativen Einfluss nicht mehr aufheben kann. Die Abriebfestigkeit wird dann in der Regel wieder abnehmen.

Die Materialen A und B können hierbei gleich oder verschieden voneinander sein.

Hinsichtlich des ersten Materials A und des zweiten Material B gelten innerhalb des Riemenkörpers vorzugsweise folgende Mengenanteile:
erstes Material A: 40 Gew.-% bis 95 Gew.-%, insbesondere 60 Gew.-% bis 80 Gew.-%
zweites Material B: 60 Gew.-% bis 5 Gew.-%, insbesondere 40 Gew.-% bis 20 Gew.-%

Als brandhemmende Additive kommen insbesondere folgende Substanzklassen zum Einsatz:
- Melaminphosphat, Melaminpolyphosphat
- Melamincyanurat
- Ammoniumpolyphosphat
- halogenierte organische Verbindungen (z.B. Polytetrafluorethylen)
- organische Phosphorsäureester (z.B. Polyphosporsäurediester)
- organische Phosphonate, Polyphosphonate
- roter Phosphor
- Metallhydroxide (z.B. Calciumhydroxid, Magnesiumhydroxid, Aluminiumhydroxid)
- Metallcarbonate (z.B. Calciumcarbonat, Magnesiumcarbonat)
- Glaspulver, Quarzpulver

Dabei kann eine einzige Substanzklasse, beispielsweise ein Melaminphospat, oder ein Zwei- oder Mehr-Komponenten-System, beispielsweise ein Gemisch aus Melaminphosphat und Melamincyanurat, verwendet werden.

Die Additive sind dabei im Wesentlichen gleichmäßig in der Polymermatrix eingemischt.

Der Mengenanteil an dem brandhemmenden Additiv für das erste Material A beträgt erfindungsgemäß 15 Gew.-% bis 50 Gew.-%, bevorzugt 15 Gew.-% bis 35 Gew.-%.

Der Mengenanteil an dem brandhemmenden Additiv für das zweite Material B beträgt erfindungsgemäß 10 bis 30 Gew.-%.

Ein weiterer Vorteil, dass sowohl das Material A als auch das Material B mit wenigstens einem brendhemmenden Additiv ausgestattet sind, liegt darin, dass sich das Herstellverfahren des Riemens vereinfachen lässt. Zunächst wird im Rahmen eines Mischverfahrens ein so genanntes Batch hergestellt, welches eine relativ hohe Konzentration an brandhemmenden Substanzen aufweist. Hierzu wird das Riemengrundmaterial mit den brandhemmenden Additiven gemischt. Dieses Batch wird anschließend mit weiterem Riemengrundmaterial zur Herstellung des Materials A oder des Materials B vermischt, bis die gewünschte Konzentration an brandhemmenden Additiven erreicht ist. Dadurch wird eine hohe Flexibilität erzielt, so dass schnell auf unterschiedliche Kundenanforderungen reagiert werden kann. Somit können Material A und Material B gleich oder verschieden voneinander sein.
Wird beispielsweise ein Batch aus Riemengrundmaterial und 50 Gew.-% brandhemmender Additive hergestellt, so muss dieses anschließend 1:1 mit dem Riemengrundmaterial vermischt werden, um einen Additivanteil von 25 Gew.-% zu erhalten und im Verhältnis 1:3, um einen Additivanteil von 12,5 Gew.-% zu erhalten.

Die Decklage des Riemens, wo die hohen mechanischen Eigenschaften nicht gefordert sind, ist mit dem ersten Material A mit seiner brandhemmenden Charakteristik ausgestattet.

Da der Unterbau mit seiner Kraftübertragungszone, die mit der Traktionsscheibe in Kontakt steht, am höchsten mechanisch beansprucht ist, kommt hier dagegen das zweite Material B mit seiner brandhemmenden Charakteristik zum Einsatz.

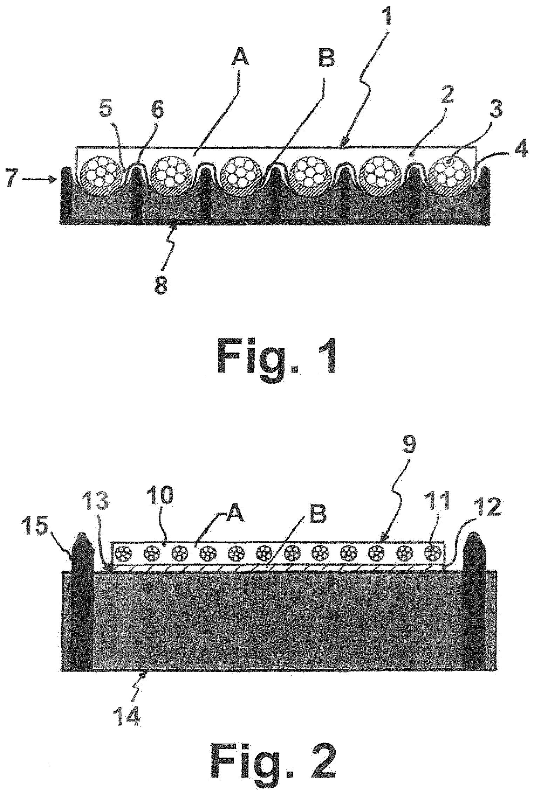

Der Bereich des Zugträgers, der auch den Übergangsbereich von Decklage und Unterbau bildet, kann mit dem ersten Material A und/oder zweiten Material B in Verbindung stehen, wobei insbesondere folgende zwei Varianten zur Anwendung gelangen:
- Das zweite Material B ist derart im Unterbau eingearbeitet, dass der Zugträger partiell oder vollständig vom zweiten Material B ummantelt ist. Die unmittelbare Umgebung des Zugträgers weist somit ebenso eine brandhemmende Charakteristik auf. Ein derartiges Materialkonzept wird in Verbindung mit dem Ausführungsbeispiel gemäß Fig. 1 noch näher vorgestellt.
- Das zweite Material B ist derart im Unterbau eingearbeitet, dass der Zugträger vom ersten Material A partiell oder vollständig ummantelt ist. Ein derartiges Materialkonzept wird in Verbindung mit dem Ausführungsbeispiel gemäß Fig. 2 ebenfalls noch näher vorgestellt.

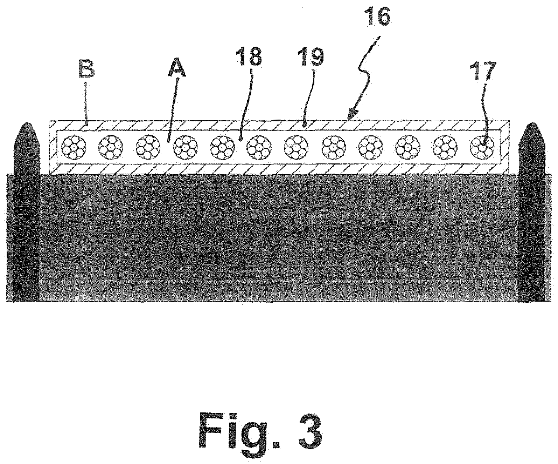

Nach einer weiteren Gestaltungsmöglichkeit bildet das erste Material A den Riemenkern und das zweite Material B die Riemenhülle. Der Zugträger ist dabei insbesondere unter vollständiger Ummantelung des ersten Materials A im Riemenkern eingebettet. Die Riemenhülle mit dem zweiten Material B umgibt vorzugsweise vollständig den Riemenkern. Ein derartiges Materialkonzept wird in Verbindung mit dem Ausführungsbeispiel gemäß Fig. 3 noch näher vorgestellt.

Zumeist ist es ausreichend, wenn der Riemenkörper ausschließlich aus den beiden Materialien A und B besteht, insbesondere in Verbindung mit den oben genannten zwei Varianten.

Je nach Riementyp sowie der Lage des Zugträgers kann es vorteilhaft sein, den Riemenkörper zusätzlich mit einer elastischen Zwischenschicht mit einem dritten Material C auszustatten, wobei innerhalb dieser Zwischenschicht der Zugträger eingebettet ist. In diese Zwischenschicht kann ein brandhemmendes Additiv eingemischt sein.

Der Riemenkörper kann zusätzlich mit wenigstens einer eingebetteten Schicht versehen sein. Diese Schicht besteht insbesondere aus einem textilen Werkstoff in Form eines Gewebes, Gewirkes oder Gestrickes. Diese Schicht kann zudem brandhemmend ausgerüstet sein, indem beispielsweise die Textilfäden brandhemmend präpariert sind.

Ebenso können die Decklage und/oder die Kraftübertragungszone zusätzlich mit einer Beschichtung versehen sein. Als Beschichtung wird insbesondere eine Textilauflage in

Form eines Gewebes, Gewirkes oder Gestrickes eingesetzt. Von besonderer Bedeutung ist dabei die Gewebeauflage. Die Beschichtung kann ebenfalls brandhemmend ausgerüstet sein, indem wiederum beispielsweise die Textilfäden brandhemmend präpariert sind.

Der Riemen ist als Flachriemen, Keilriemen, Keilrippenriemen, Zahnriemen oder als Verbundseile ausgebildet.

Der erfindungsgemäße Riemen wird insbesondere als Zugelement in der Aufzugstechnik verwendet, insbesondere unter Einsatz von Verbundseilen, eines Flachriemens oder Zahnriemens. Im Brandfall wird das Feuer nicht über das Zugelement über die Höhe des gesamten Aufzugsschachtes verteilt. Das so materialmäßig ausgerüstete Zugelement fängt sehr schlecht Feuer und zeigt keine Mängel in den mechanischen Eigenschaften. Der Aufzug bleibt bedingt funktionstüchtig. Ein weiterer Vorteil ist, dass ein derartiges Zugelement einen Gebäudebrand nicht von einer Etage auf die nächste Etage übertragen kann.

Die Erfindung wird nun anhand von zwei Ausführungsbeispielen unter Bezugnahme auf schematische Zeichnungen erläutert. Es zeigen:
- Fig. 1: einen Riemen in Form von Verbundseilen als Zugelement für die Aufzugstechnik im Zusammenwirken mit einer profilierten Traktionsscheibe;
- Fig. 2: einen Riemen in Form eines Flachriemens als Zugelement für die Aufzugstechnik im Zusammenwirken mit einer unprofilierten Traktionsscheibe;
- Fig. 3: einen Riemen in Form eines Flachriemens mit Riemenkern und Riemenhülle als Zugelement für die Aufzugstechnik im Zusammenwirken mit einer unprofilierten Traktionsscheibe.

Fig. 1 zeigt einen Riemen 1 als Zugelement für die Aufzugstechnik, und zwar in Form von Verbundseilen mit einer Decklage 2 als Riemenrücken, einem eingebetteten Zugträger 3 mit mehreren in Längsrichtung verlaufenden Zugsträngen in Form von Stahlcorden sowie einem Unterbau 4. Der Unterbau 4 weist eine Rippenrillenstruktur auf, gebildet aus Rippen 5 und Rillen 6. Die Stahlcorde des Zugträgers 3 sind dabei jeweils im Wesentlichen innerhalb einer Rippe 5 angeordnet. Der Unterbau 4 umfasst schließlich die Kraftübertragungszone 7, die mit einer entsprechend profilierten Traktionsscheibe 8 korrespondiert. Hinsichtlich konstruktiver Details der Traktionsscheibe 8 wird beispielsweise auf DE 10 2008 037 537 A1 und DE 10 2008 037 538 A1 verwiesen.

Die Decklage 2 und der Unterbau 4 bilden als Gesamteinheit den elastischen Riemenkörper, der auch als Grundkörper bezeichnet wird, beispielsweise auf PU-Basis. Der Riemenkörper besteht dabei aus einem ersten Material A und einem zweiten Material B. Das erste Material A umfasst dabei die gesamte Decklage 2, wo die hohen mechanischen Eigenschaften nicht gefordert sind. Das zweite Material B, umfasst nahezu den gesamten Unterbau 4 mit der Kraftübertragungszone 7. Dort ist der Riemenkörper am stärksten mechanisch belastet. Das zweite Material B ist dabei innerhalb einer Rippe 5 des Unterbaus 4 angeordnet und ummantelt zugleich nahezu den gesamten Zugträger 3.

Fig. 2 zeigt einen Riemen 9 als Zugelement für die Aufzugstechnik, und zwar hier in Form eines Flachriemens mit einer Decklage 10 als Riemenrücken, einem eingebetteten Zugträger 11 mit mehreren in Längsrichtung verlaufenden Zugsträngen in Form von Stahlcorden sowie einem Unterbau 12. Der Unterbau 12 ist hier flach ausgebildet und umfasst die Kraftübertragungszone 13, die mit einer Traktionsscheibe 14 mit Bordscheibe 15 korrespondiert. Hinsichtlich konstruktiver Details der Traktionsscheibe 14 wird hier beispielsweise auf US 2002/0000346 A1 verwiesen.

Die Decklage 10 und der Unterbau 12 bilden hier ebenfalls als Gesamteinheit den elastischen Riemenkörper, beispielsweise wiederum auf PU-Basis. Der Riemenkörper besteht dabei aus einem ersten Material A und einem zweiten Material B. Das erste Material A umfasst dabei die gesamte Decklage 10 sowie den gesamten Bereich des Zugträgers 11. Dies bedeutet, dass hier sämtliche Stahlcorde von dem ersten Material A vollständig ummantelt sind. Der Unterbau 12 mit der flachen Kraftübertragungszone 13 ist mit dem zweiten Material B ausgestattet.

Fig. 3 zeigt einen Riemen 16 als Zugelement für die Aufzugstechnik, und zwar wie bei dem Ausführungsbeispiel 2 in Form eines Flachriemens. Der Unterschied besteht darin, dass hier das erste Material A den Riemenkern 18 und das zweite Material B die Riemenhülle 19 bildet. Der Zugträger 17 ist dabei unter vollständiger Ummantelung des ersten Materials A im Riemenkern 18 eingebettet. Die Riemenhülle 19 umgibt vollständig den Riemenkern 18. Das erste Material A umfasst somit den gesamten Riemenkern 18. Die gesamte Riemenhülle 19 ist dagegen mit dem zweiten Material B ausgestattet. Somit kann die Riemenhülle 19 mit dem zweiten Material B an den einem Feuer ausgesetzten Stellen nicht vollständig durchbrennen, während der Riemenkern 18 mit dem ersten Material A die Brandausdehnung auf den gesamten Riemen 16 im Zweifel verhindert.

Hinsichtlich der Traktionsscheibe wird auf das Ausführungsbeispiel gemäß Fig. 2 verwiesen.

### Bezugszeichenliste

### (Teil der Beschreibung)

- 1: Riemen als Zugelement in Form von Verbundseilen
- 2: Decklage als Riemenrücken
- 3: Zugträger in Form von Stahlcorden
- 4: Unterbau
- 5: Rippen
- 6: Rillen
- 7: Kraftübertragungszone
- 8: Traktionsscheibe
- 9: Riemen als Zugelement in Form eines Flachriemens
- 10: Decklage als Riemenrücken
- 11: Zugträger in Form von Stahlcorden
- 12: Unterbau
- 13: Kraftübertragungszone
- 14: Traktionsscheibe
- 15: Bordscheibe
- 16: Riemen als Zugelement in Form eines Flachriemens
- 17: Zugträger in Form von Stahlcorden
- 18: Riemenkern mit eingebetteten Zugträgern
- 19: Riemenhülle
- A: erstes Material
- B: zweites Material

## Patentansprüche

1. Riemen (1, 9, 16) für die Antriebstechnik, bestehend wenigstens aus:
- einem Riemenkörper aus zwei polymeren Materialen A und B mit elastischen Eigenschaften, umfassend eine Decklage (2, 10) als Riemenrücken und einen Unterbau (4, 12) mit einer Kraftübertragungszone (7, 13) und
- einem in dem Riemenkörper eingebetteten Zugträger (3, 11, 17) wobei
- das erste Material A 15 bis 50 Gew. -% wenigstens eines brandhemmenden Additivs enthält und überall dort im Riemenkörper verbaut ist, wo die hohen mechanischen Eigenschaften nicht gefordert sind, und
**dadurch gekennzeichnet, dass**
- das zweite Material B 10 bis 35 Gew. -% wenigstens eines brandhemmenden Additivs enthält und in dem Bereich des Riemenkörpers zum Einsatz kommt, welcher am höchsten mechanisch beansprucht ist.

2. Riemen nach Anspruch 1, **dadurch gekennzeichnet, dass** als brandhemmendes Additiv Melaminphosphat und/oder Melaminpolyphosphat und/oder Melamincyanurat und/oder Ammoniumpolyphosphat und/oder eine hologenierte organische Verbindung und/oder ein organischer Phosphorsäureester und/oder ein organisches Phosphonat und/oder roter Phosphor und/oder ein Metallhydroxid und/oder ein Metallcarbonat und/oder Glaspulver und/oder Quarzpulver zum Einsatz gelangt.

3. Riemen nach einem der Ansprüche 1 bis 2, **dadurch gekennzeichnet, dass** das Material A gleich oder verschieden von Material B ist.

4. Riemen nach einem der Ansprüche 1 bis 3, **dadurch gekennzeichnet, dass** der Riemen (1, 9) als Flachriemen (9, 16), Keilriemen, Keilrippenriemen, Zahnriemen oder als Verbundseile (1) ausgebildet ist.

5. Verwendung eines Riemens (1, 9, 16) nach einem der Ansprüche 1 bis 4 als riemenartiges Zugelement für die Aufzugstechnik.

## Claims

1. Belt (1, 9, 16) for drive engineering, composed at least of
- a belt structure made of two polymeric materials A and B with elastic properties, encompassing an outer layer (2, 10) as belt backing and a substructure (4, 12) with a force-transmission zone (7, 13) and
- a tension-member system (3, 11, 17) embedded in the belt structure,
where
- the first material A comprises from 15 to 50% by weight of at least one fire-retardant additive and has been incorporated in the belt structure wherever there is no requirement for a high level of mechanical properties, and **characterized in that**
- the second material B comprises from 10 to 35% by weight of at least one fire-retardant additive and is used in the belt-structure region which is subject to the highest level of mechanical requirements.

2. Belt according to Claim 1, **characterized in that** fire-retardant additive used comprises melamine phosphate and/or melamine polyphosphate and/or melamine cyanurate and/or ammonium polyphosphate and/or a halogenated organic compound and/or an organic phosphoric ester and/or an organic phosphonate and/or red phosphorus and/or a metal hydroxide and/or a metal carbonate and/or glass powder and/or quartz powder.

3. Belt according to either of Claims 1 and 2, **characterized in that** the material A is the same as, or different from, material B.

4. Belt according to any of Claims 1 to 3, **characterized in that** the belt (1, 9) is a flat belt (9, 16), V-belt, V-ribbed belt or toothed belt, or composite cable (1).

5. Use of a belt (1, 9, 16) according to any of Claims 1 to 4 as belt-like tension element for elevator engineering.

## Revendications

1. Courroie (1, 9, 16) pour la technique d'entraînement, au moins constituée par :
- un corps de courroie en deux matériaux polymères A et B dotés de propriétés élastiques, comprenant une couche de recouvrement (2, 10) comme dos de courroie et une base (4, 12) présentant une zone de transfert de force (7, 13) et
- un support de traction (3, 11, 17) incorporé dans le corps de courroie
- le premier matériau A contenant 15 à 50% en poids d'au moins un additif ignifuge et étant introduit dans le corps de courroie partout où les propriétés mécaniques élevées ne sont pas exigées et
**caractérisée en ce que**
- le deuxième matériau B contient 10 à 35% en poids d'au moins un additif ignifuge et utilisé dans la zone du corps de courroie qui est mécaniquement la plus sollicitée.

2. Courroie selon la revendication 1, **caractérisée en ce qu'**on utilise, comme additif ignifuge, du phosphate de mélamine et/ou du polyphosphate de mélamine et/ou du cyanurate de mélamine et/ou du polyphosphate d'ammonium et/ou un composé organique halogéné et/ou un ester organique de l'acide phosphorique et/ou un phosphonate organique et/ou du phosphore rouge et/ou un hydroxyde métallique et/ou un carbonate métallique et/ou de la poudre de verre et/ou de la poudre de quartz.

3. Courroie selon l'une quelconque des revendications 1 à 2, **caractérisée en ce que** le matériau A est identique au matériau B ou différent de celui-ci.

4. Courroie selon l'une quelconque des revendications 1 à 3, **caractérisée en ce que** la courroie (1, 9) est réalisée sous forme de courroie plate (9, 16), de courroie trapézoïdale, de courroie trapézoïdale à nervures, de courroie dentée, ou de câble de liaison (1).

5. Utilisation d'une courroie (1, 9, 16) selon l'une quelconque des revendications 1 à 4 comme élément de traction de type courroie pour ascenseurs.
